(19) Europäisches Patentamt
European Patent Office
Office européen des brevets

(11) EP 2 997 098 B1

(12) EUROPEAN PATENT SPECIFICATION

(45) Date of publication and mention of the grant of the patent:
**22.03.2017 Bulletin 2017/12**

(21) Application number: **14724914.8**

(22) Date of filing: **08.04.2014**

(51) Int Cl.:
***C09D 101/28*** *(2006.01)* ***A23L 33/21*** *(2016.01)*
***C08J 3/21*** *(2006.01)*

(86) International application number:
**PCT/US2014/033272**

(87) International publication number:
**WO 2014/168914 (16.10.2014 Gazette 2014/42)**

# (54) WATER-SOLUBLE POLYSACCHARIDES OF IMPROVED PALATABILITY

WASSERLÖSLICHE POLYSACCHARIDE MIT VERBESSERTER SCHMACKHAFTIGKEIT

POLYSACCHARIDES HYDROSOLUBLES DE MEILLEURE PALATABILITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.04.2013 US 201361811299 P**

(43) Date of publication of application:
**23.03.2016 Bulletin 2016/12**

(73) Proprietor: **Dow Global Technologies LLC**
**Midland, MI 48674 (US)**

(72) Inventors:
- **DEO, Puspendu**
  **Midland, MI 48642 (US)**
- **BROWN, Kathryn**
  **Mount Pleasant, MI 48858 (US)**
- **SHESKEY, Paul J.**
  **Midland, MI 48640-9026 (US)**
- **THEUERKAUF, Jorg**
  **Lake Jackson, TX 77566 (US)**
- **ADDEN, Roland**
  **29664 Walsrode (DE)**

(74) Representative: **f & e patent**
**Fleischer, Engels & Partner mbB, Patentanwälte**
**Braunsberger Feld 29**
**51429 Bergisch Gladbach (DE)**

(56) References cited:
**WO-A1-92/09212**
**WO-A1-98/27989**
**WO-A1-03/020244**
**US-B1- 6 235 893**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

FIELD

This invention concerns water-soluble polysaccharides of improved palatability and a method of preparing them.

INTRODUCTION

Water-soluble polysaccharide and polysaccharide derivatives have found a wide range of uses in food, food ingredients or food supplements.

One end-use is known as "dietary fiber". This term is often used to describe non-starch water-soluble polysaccharides and polysaccharide derivatives which are not digested by enzymes of the upper intestinal tract. Dietary fibers can be used as slimming aid for obese and non-obese individuals and/or as a bulk laxative. Some dietary fibers, such as guar gum, methylcellulose or hydroxypropyl methylcellulose, form viscous solutions in water and have been shown to be efficient at inducing satiety and/or at reducing in causing weight loss in individuals.

International Patent Application WO 2005/020718 discloses the use of a large number of biopolymers for inducing satiety in a human or animal, such as non-starch polysaccharides selected from alginates, pectins, carrageenans, amidated pectins, xanthans, gellans, furcellarans, karaya gum, rhamsan, welan, gum ghatti, and gum arabic. Of these, alginates are said to be especially preferred. Alternatively, neutral non-starch polysaccharides selected from galactamannan, guar gum, locust bean gum, tara gum, ispaghula, P-glucans, konjacglucomannan, methylcellulose, gum tragacanth, detarium, or tamarind may be used.

International Patent Application WO 92/09212 discusses that one major disadvantage in the use of these types of polysaccharides is the difficulty in controlling their swelling behavior. The dry dietary fiber is usually dispersed in an aqueous medium, thus giving rise to a very rapid swelling through the binding of water molecules to the polysaccharide, i.e., the dissolution of the fiber takes place more or less instantaneously. The highly viscous dispersion which is then formed becomes difficult to ingest if not taken immediately and provides a slimy or tacky sensation in the mouth. To overcome this problem WO 92/09212 suggests a dietary fiber composition comprising a water-soluble, nonionic cellulose ether having a cloud point not higher than 35 °C, such as ethyl hydroxyethyl cellulose and a charged surfactant, such as alkyl ammonium compounds or alkyl ether sulphates, such as sodium dodecyl sulphate (SDS). SDS is used in large quantities in detergent compositions, but animal studies have suggested that SDS causes skin and eye irritation.

Accordingly, it would be desirable to find another way to improve the palatability of a water-soluble polysaccharide, particularly of a non-starch water-soluble polysaccharide. It would be particularly desirable to improve the palatability of a water-soluble polysaccharide without making use of a charged monomeric surfactant.

SUMMARY

Surprisingly, it has been found that the palatability of a water-soluble non-starch polysaccharide can be improved by at least partially coating it with a certain methylcellulose.

Accordingly, one aspect of the present invention is a non-starch water-soluble polysaccharide (A) which is at least partially coated with a methylcellulose (B) having anhydroglucose units joined by 1-4 linkages wherein hydroxy groups of anhydroglucose units are substituted with methyl groups such that s23/s26 is 0.36 or less, wherein s23 is the molar fraction of anhydroglucose units wherein only the two hydroxy groups in the 2- and 3-positions of the anhydroglucose unit are substituted with methyl groups and wherein s26 is the molar fraction of anhydroglucose units wherein only the two hydroxy groups in the 2- and 6-positions of the anhydroglucose unit are substituted with methyl groups, and wherein the non-starch water-soluble polysaccharide (A) is different from said methylcellulose (B).

Another aspect of the present invention is a food, food ingredient or food supplement which comprises the above-mentioned at least partially coated polysaccharide.

Yet another aspect of the present invention is a method of improving the palatability of a non-starch water-soluble polysaccharide which comprises the step of at least partially coating the non-starch water-soluble polysaccharide (A) with the above-mentioned methylcellulose (B), with the proviso that the non-starch water-soluble polysaccharide (A) is different from said methylcellulose (B).

DESCRIPTION OF EMBODIMENTS

The non-starch water-soluble polysaccharides (A) which are useful in the present invention have a solubility of at least 1 gram, more preferably at least 2 grams in distilled water at 25 °C and 1 atmosphere.

Examples of non-starch polysaccharides include natural gums comprising a polysaccharide hydrocolloid containing mannose repeating units, carrageenans, pectins, amidated pectins, xanthan gum, gum karaya, gum tragacanth,

alginates, gellan gum, guar derivatives, xanthan derivatives, furcellarans, rhamsan, cellulose derivatives, or mixture of two or more of such polysaccharides.

Hydrocolloids are well known to the person skilled in the art and polysaccharide hydrocolloids are polysaccharide-based compositions that form colloidal dispersions (also referred to as "colloidal solutions") in water. Typically, they are also able to form gels. In preferred embodiments the polysaccharide hydrocolloid is selected from glucomannan, galactomannan, and mixtures thereof. Typically, the natural gum is a vegetable gum such as konjac gum, fenugreek gum, guar gum, tara gum, locust bean gum (carob gum), or a mixture of at least two of them.

Carrageenans are polysaccharides made of repeating units of galactose and 3,6-anhydrogalactose (3,6-AG), both sulfated and nonsulfated. The units are joined by alternating $1\alpha\rightarrow3$ and $1\beta\rightarrow4$ glycosidic linkages.

Guar derivatives and xanthan derivatives are described in more detail in European patent EP 0 504 870 B, page 3, lines 25-56 and page 4, lines 1-30. Useful guar derivatives are, for example, carboxymethyl guar, hydroxypropyl guar, carboxymethyl hydroxypropyl guar or cationized guar. Preferred hydroxypropyl guars and the production thereof are described in U.S patent No. 4,645,812, columns 4-6.

The cellulose derivative is preferably a non-ionic cellulose ether, more preferably an alkyl cellulose, hydroxyalkyl cellulose or hydroxyalkyl alkylcellulose, such as a $C_2$-$C_3$-alkyl cellulose, $C_1$-$C_3$-alkyl hydroxy-$C_{1-3}$-alkyl cellulose, hydroxy-$C_{1-3}$-alkyl cellulose, mixed hydroxy-$C_1$-$C_3$-alkyl cellulose, or mixed $C_1$-$C_3$-alkyl cellulose, provided that the cellulose ether is different from the methylcellulose (B) described further below. Advantageously, the non-starch polysaccharide (A) is not methylcellulose. This means that in the cellulose ether at least a part of the hydroxyl groups of the anhydroglucose units are substituted by alkoxyl groups or hydroxyalkoxyl groups or a combination of alkoxyl and hydroxyalkoxyl groups. Typically one or two kinds of hydroxyalkoxyl groups are present in the cellulose ether. Preferably a single kind of hydroxyalkoxyl group, more preferably hydroxypropoxyl, is present.

Preferred alkyl hydroxyalkyl celluloses including mixed alkyl hydroxyalkyl celluloses are hydroxyalkyl methylcelluloses, such as hydroxyethyl methylcelluloses, hydroxypropyl methylcelluloses or hydroxybutyl methylcelluloses; or hydroxyalkyl ethyl celluloses, such as hydroxypropyl ethylcelluloses, ethyl hydroxyethyl celluloses, ethyl hydroxypropyl celluloses or ethyl hydroxybutyl celluloses; or ethyl hydroxypropyl methylcelluloses, ethyl hydroxyethyl methylcelluloses, hydroxyethyl hydroxypropyl methylcelluloses or alkoxy hydroxyethyl hydroxypropyl celluloses, the alkoxy group being straight-chain or branched and containing 2 to 8 carbon atoms. Preferred hydroxyalkyl celluloses are hydroxyethyl celluloses, hydroxypropyl celluloses or hydroxybutyl celluloses; or mixed hydroxylkyl celluloses, such as hydroxyethyl hydroxypropyl celluloses.

Preferred are hydroxyalkyl alkylcelluloses, more preferred are hydroxyalkyl methylcelluloses and most preferred are hydroxypropyl methylcelluloses, preferably those which have an MS(hydroxyalkoxyl) and a DS(alkoxyl) described below. The degree of the substitution of hydroxyl groups of the anhydroglucose units by hydroxyalkoxyl groups is expressed by the molar substitution of hydroxyalkoxyl groups, the MS(hydroxyalkoxyl). The MS(hydroxyalkoxyl) is the average number of moles of hydroxyalkoxyl groups per anhydroglucose unit in the cellulose ether. It is to be understood that during the hydroxyalkylation reaction the hydroxyl group of a hydroxyalkoxyl group bound to the cellulose backbone can be further etherified by an alkylation agent, e.g. a methylation agent, and/or a hydroxyalkylation agent. Multiple subsequent hydroxyalkylation etherification reactions with respect to the same carbon atom position of an anhydroglucose unit yields a side chain, wherein multiple hydroxyalkoxyl groups are covalently bound to each other by ether bonds, each side chain as a whole forming a hydroxyalkoxyl substituent to the cellulose backbone. The term "hydroxyalkoxyl groups" thus has to be interpreted in the context of the MS(hydroxyalkoxyl) as referring to the hydroxyalkoxyl groups as the constituting units of hydroxyalkoxyl substituents, which either comprise a single hydroxyalkoxyl group or a side chain as outlined above, wherein two or more hydroxyalkoxy units are covalently bound to each other by ether bonding. Within this definition it is not important whether the terminal hydroxyl group of a hydroxyalkoxyl substituent is further alkylated, e.g. methylated, or not; both alkylated and non-alkylated hydroxyalkoxyl substituents are included for the determination of MS(hydroxyalkoxyl). The hydroxyalkyl alkylcelluloses of the invention generally has a molar substitution of hydroxyalkoxyl groups in the range of 0.05 to 1.00, preferably 0.08 to 0.70, more preferably 0.10 to 0.50, even more preferably 0.10 to 0.40, and most preferably 0.10 to 0.35.

The average number of hydroxyl groups substituted by alkoxyl groups, such as methoxyl groups, per anhydroglucose unit, is designated as the degree of substitution of alkoxyl groups, DS(alkoxyl). In the above-given definition of DS, the term "hydroxyl groups substituted by alkoxyl groups" is to be construed within the present invention to include not only alkylated hydroxyl groups directly bound to the carbon atoms of the cellulose backbone, but also alkylated hydroxyl groups of hydroxyalkoxyl substituents bound to the cellulose backbone. The hydroxyalkyl alkylcelluloses according to this invention preferably have a DS(alkoxyl) in the range of 1.0 to 2.5, more preferably 1.1 to 2.2, and most preferably 1.1 to 1.6. Most preferably the cellulose ether is a hydroxypropyl methylcellulose or hydroxyethyl methylcellulose having a DS(methoxyl) within the ranges indicated above for DS(alkoxyl) and an MS(hydroxypropoxyl) or an MS(hydroxyethoxyl) within the ranges indicated above for MS(hydroxyalkoxyl). The degree of substitution of alkoxyl groups and the molar substitution of hydroxyalkoxyl groups can be determined by Zeisel cleavage of the cellulose ether with hydrogen iodide and subsequent quantitative gas chromatographic analysis (G. Bartelmus and R. Ketterer, Z. Anal.

Chem., 286 (1977) 161-190).

The viscosity of the polysaccharide (A), preferably a cellulose ether different from methylcellulose (B), is generally more than 10,000 mPa·s, preferably from 25,000 to 2,000,000 mPa·s, more preferably from 50,000 to 800,000 mPa·s, and most preferably from 100,000 to 500,000, determined as a 2.0 % by weight solution in water at 20°C ± 0.1 °C by an Ubbelohde viscosity measurement according to DIN 51562-1:1999-01 (January 1999). The polysaccharide (A) is generally in particulate form, preferably in the form of a powder or in granular form.

The non-starch water-soluble polysaccharide (A) is at least partially coated with a methylcellulose (B). The methylcellulose (B) has anhydroglucose units joined by 1-4 linkages. Each anhydroglucose unit contains hydroxyl groups at the 2, 3, and 6 positions. Partial or complete substitution of these hydroxyls creates cellulose derivatives. For example, treatment of cellulosic fibers with caustic solution, followed by a methylating agent, yields cellulose ethers substituted with one or more methoxy groups. If not further substituted with other ether groups, this cellulose derivative is known as methylcellulose. An essential feature of the present invention is the use of a specific methylcellulose which has anhydroglucose units joined by 1-4 linkages wherein hydroxy groups of anhydroglucose units are substituted with methyl groups such that s23/s26 is 0.36 or less, preferably 0.33 or less, more preferably 0.30 or less, most preferably 0.27 or less or 0.26 or less, and particularly 0.24 or less or 0.22 or less. Typically s23/s26 is 0.08 or more, 0.10 or more, 0.12 or more, 0.14 or more or 0.16 or more. The term "wherein hydroxy groups of anhydroglucose units are substituted with methyl groups" as used herein means that the hydrogen in a hydroxy group is replaced by a methyl group to form a methoxy group. In the ratio s23/s26, s23 is the molar fraction of anhydroglucose units wherein only the two hydroxy groups in the 2- and 3-positions of the anhydroglucose unit are substituted with methyl groups and s26 is the molar fraction of anhydroglucose units wherein only the two hydroxy groups in the 2- and 6-positions of the anhydroglucose unit are substituted with methyl groups. For determining the s23, the term "the molar fraction of anhydroglucose units wherein only the two hydroxy groups in the 2- and 3-positions of the anhydroglucose unit are substituted with methyl groups" means that the two hydroxy groups in the 2- and 3-positions are substituted with methyl groups and the 6-positions are unsubstituted hydroxy groups. For determining the s26, the term "the molar fraction of anhydroglucose units wherein only the two hydroxy groups in the 2- and 6-positions of the anhydroglucose unit are substituted with methyl groups" means that the two hydroxy groups in the 2- and 6-positions are substituted with methyl groups and the 3-positions are unsubstituted hydroxy groups.

Formula I below illustrates the numbering of the hydroxy groups in anhydroglucose units.

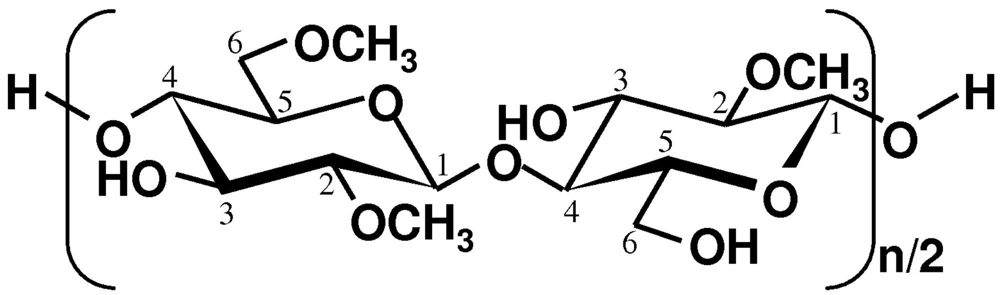

Formula I

The methylcellulose (B) preferably has a DS(methyl) of from 1.55 to 2.25, more preferably from 1.65 to 2.20, and most preferably from 1.70 to 2.10. The degree of the methyl substitution, DS(methyl), also designated as DS(methoxyl), of a methylcellulose is the average number of OH groups substituted with methyl groups per anhydroglucose unit. The determination of the % methoxyl in methylcellulose (B) is carried out according to the United States Pharmacopeia (USP 34). The values obtained are % methoxyl. These are subsequently converted into degree of substitution (DS) for methyl substituents. Residual amounts of salt have been taken into account in the conversion.

The viscosity of the methylcellulose (B) is preferably from 2.4 to 10,000 mPa•s, more preferably from 3 to 8,000 mPa•s, even more preferably from 4 to 6,000 mPa•s, most preferably from 4 to 1000 mPa•s, and particularly from 4 to 400 mPa•s, when measured as a 2 wt. % aqueous solution at 5 °C at a shear rate of 10 $s^{-1}$.

The methylcellulose (B) is contacted with one or more non-starch water-soluble polysaccharides (A) to at least partially coat the non-starch water-soluble polysaccharide(s) (A). The non-starch water-soluble polysaccharide (A) is generally coated with 0.1 to 20 percent, preferably with 0.5 to 10 percent, and more preferably with 1 to 5 percent of the methylcellulose (B), based on the total weight of the non-coated polysaccharide (A).

To prepare a coating of the methylcellulose (B) on the non-starch water-soluble polysaccharide (A), a fluid composition is prepared which generally comprises from 0.1 to 30 percent, preferably from 1 to 25 percent, and more preferably from 2 to 20 percent of the methylcellulose (B) and from 99.9 to 70 percent, preferably from 99 to 75 percent, and more preferably from 98 to 80 percent of a liquid diluent, based on the total weight of the methylcellulose (B) and

the liquid diluent. The term "liquid diluent" means a diluent that is liquid at normal pressure and 25 °C. Preferably, the liquid diluent is water or a blend of more than 50, preferably at least 70 weight percent of water and less than 50, preferably up to 30 weight percent of an alcohol, such as ethanol. To produce a solution of the methylcellulose (B) in water, optionally blended with a minor amount of an alcohol, the methylcellulose (B) is typically contacted with the water and optionally alcohol while stirring. The initial temperature of the water, optionally mixed with the alcohol, is preferably 20 °C or more, typically from 22 to 40 °C to achieve a good dispersion in water. The mixture is then preferably cooled to a temperature of 1 to 5 °C while stirring to bring the methylcellulose into solution. Preferably the solution of methylcellulose (B) is applied to the polysaccharide (A) in its cooled state.

The fluid composition comprising the methylcellulose (B) and the liquid diluent, preferably an aqueous solution of the methylcellulose (B), can be applied in a known manner to the non-starch water-soluble polysaccharide (A) that typically is in particulate form, preferably in the form of a powder or in granular form. For example, the fluid composition can be sprayed on the polysaccharide particles or the polysaccharide particles can otherwise be blended with the fluid composition. Devices for carrying out the coating step are known in the art, such as high shear granulators, ring layer mixers, or fluid bed coating equipments. Alternatively, the fluid composition is contacted with a gas to produce a foamed fluid, and the produced foamed fluid is contacted with the particles of polysaccharide (A), e.g., as described in International Patent Applications WO 03/020244 and WO 03/020247. The foamed fluid and the polysaccharide particles are preferably chosen in such amounts that the above-mentioned weight ratios between the methylcellulose (B) and the particles of polysaccharide (A) are achieved. Advantageously known mixing devices are used, such as a high shear mixing device, a low shear mixing device, a fluidized bed granulator, a roller compactor or a spray dryer. The contacting step is followed by a drying step which can be conducted in a known manner. The foam lamellae break during the contacting and/or the drying step whereby the foam collapses and the polysaccharide particles are at least partially coated with the methylcellulose (B). The particles of polysaccharide (A) are generally granulated upon contact with the foamed fluid composition. The produced, generally granular, material can be subjected to one or more known compounding steps, such as mixing with optional ingredients. Exemplary of optional ingredients are sugars, artificial sweeteners, colorants, flavorants, or combinations thereof.

When non-coated water-soluble polysaccharide (A) is dispersed in an aqueous medium, it rapidly swells through the binding of water molecules to the polysaccharide resulting in a highly viscous dispersion which becomes difficult to ingest and provides a slimy or tacky sensation in the mouth. Even when trying to ingest the water-soluble polysaccharide (A) in dry form, rapid binding of water molecules in the saliva to the polysaccharide takes place.

It has surprisingly been found that the non-starch water-soluble polysaccharide (A) which is at least partially coated with a methylcellulose (B) as described above has improved palatability. It has been found that an undue viscosity increase of the at least partially coated non-starch water-soluble polysaccharide (A) in the mouth can be delayed for at least 5 minutes, typically for at least 10 minutes. As the average residence time for food products in the mouth is about 2 to 3 minutes, this delay in viscosity increase to an unacceptable level is sufficient to reduce the slimy or tacky sensation in the mouth upon intake of a water-soluble polysaccharide (A) to a large extent. It has also surprisingly been found that methylcelluloses (B) as described above are more effective in improving the palatability of non-starch water-soluble polysaccharides (A) than corresponding methylcelluloses wherein hydroxy groups of anhydroglucose units are substituted with methyl groups such that s23/s26 is more than 0.36.

A method of making methylcellulose used in the present invention is described in more detail in the Examples. Generally, cellulose pulp is treated with a caustic, for example an alkali metal hydroxide. Preferably, about 1.5 to about 3.0 mol NaOH per mol of anhydroglucose units in the cellulose is used. Uniform swelling and alkali distribution in the pulp is optionally controlled by mixing and agitation. The rate of addition of aqueous alkaline hydroxide is governed by the ability to cool the reactor during the exothermic alkalization reaction. In one embodiment, an organic solvent such as dimethyl ether is added to the reactor as a diluent and a coolant. Likewise, the headspace of the reactor is optionally purged with an inert gas (such as nitrogen) to minimize unwanted reactions with oxygen and molecular weight losses of the methylcellulose. In one embodiment, the temperature is maintained at or below 45 °C.

A methylating agent, such as methyl chloride, is also added by conventional means to the cellulose pulp, either before, after, or concurrent with the caustic, generally in an amount of 2.0 to 3.5 mol methylating agent per mol of anhydroglucose units in the cellulose. Preferably, the methylating agent is added after the caustic. Once the cellulose has been contacted with caustic and methylating agent, the reaction temperature is increased to about 75 °C and reacted at this temperature for about half an hour.

In a preferred embodiment, a staged addition is used, i.e., a second amount of caustic is added to the mixture over at least 30 minutes, preferably at least 45 minutes, while maintaining the temperature at least at 55 °C, preferably a least at 65 °C. Preferably, 2 to 4 mol caustic per mol of anhydroglucose units in the cellulose is used. A staged second amount of methylating agent is added to the mixture, either before, after, or concurrent with the caustic, generally in an amount of 2 to 4.5 mol methylating agent per mol of anhydroglucose units in the cellulose. Preferably, the second amount of methylating agent is added prior to the second amount of caustic.

The methylcellulose is washed to remove salt and other reaction by-products. Any solvent in which salt is

soluble may be employed, but water is preferred. The methylcellulose may be washed in the reactor, but is preferably washed in a separate washer located downstream of the reactor. Before or after washing, the methylcellulose may be stripped by exposure to steam to reduce residual organic content. The cellulose ether may subsequently be subjected to a partial depolymerization process. Partial depolymerization processes are well known in the art and described, for example, in European Patent Applications EP 1,141,029; EP 210,917; EP 1,423,433; and US Patent No. 4,316,982. Alternatively, partial depolymerization can be achieved during the production of the cellulose ethers, for example by the presence of oxygen or an oxidizing agent.

The methylcellulose is dried to a reduced moisture and volatile content of preferably 0.5 to 10.0 weight percent water and more preferably 0.8 to 5.0 weight percent water and volatile based upon the weight of methylcellulose. The reduced moisture and volatiles content enables the methylcellulose to be milled into particulate form. The methylcellulose is milled to particulates of desired size. If desired, drying and milling may be carried out simultaneously.

Some embodiments of the invention will now be described in detail in the following Examples.

EXAMPLES

Unless otherwise mentioned, all parts and percentages are by weight. In the Examples the following production and test procedures are used.

Production of Methylcellulose (B) having an s23/s26 of 0.36 or less

Methylcellulose (B) was produced according to the following procedure. Finely ground wood cellulose pulp was loaded into a jacketed, agitated reactor. The reactor was evacuated and purged with nitrogen to remove oxygen, and then evacuated again. The reaction was carried out in two stages. In the first stage, a 50 weight percent aqueous solution of sodium hydroxide was sprayed onto the cellulose until the level reaches 1.8 mol of sodium hydroxide per mol of anhydroglucose units of the cellulose, and then the temperature was adjusted to 40°C. After stirring the mixture of aqueous sodium hydroxide solution and cellulose for about 20 minutes at 40°C, 1.5 mol of dimethyl ether and 2.3 mol of methyl chloride per mol of anhydroglucose units were added to the reactor. The contents of the reactor were then heated in 60 min to 80 °C. After having reached 80 °C, the first stage reaction was allowed to proceed for 5 min. Then the reaction was cooled down to 65 °C in 20 min.

The second stage of the reaction was started by addition of methyl chloride in an amount of 3.4 molar equivalents of methyl chloride per mol of anhydroglucose unit. The addition time for methyl chloride was 20 min. Then a 50 weight percent aqueous solution of sodium hydroxide at an amount of 2.9 mol of sodium hydroxide per mol of anhydroglucose units was added over a time period of 45 min. The rate of addition was 0.064 mol of sodium hydroxide per mol of anhydroglucose units per minute. After the second-stage addition was completed the contents of the reactor were heated up to 80 °C in 20 min and then kept at a temperature of 80 °C for 120 min.

After the reaction, the reactor was vented and cooled down to about 50 °C. The contents of the reactor were removed and transferred to a tank containing hot water. The crude MC was then neutralized with formic acid and washed chloride free with hot water (assessed by $AgNO_3$ flocculation test), cooled to room temperature, dried at 55 °C in an air-swept drier and subsequently ground.

The methylcellulose was partially depolymerized by contacting it with 1.5 g gaseous HCl per 1000 g of methylcellulose at a temperature of 60 °C for 15 min. to achieve a steady-shear-flow viscosity $\eta$(5 °C, 10 $s^{-1}$, 2 wt.% MC) of 300 - 400 mPa•s, the HCl gas was removed by evacuation, the methylcellulose was cooled to room temperature and subsequently neutralized with sodium bicarbonate.

The methylcellulose (B) had a DS(methyl) of 1.88 (30.9 wt.% methoxyl), a mol fraction (26-Me) of 0.3276 $\pm$ 0.0039, a mol fraction (23-Me) of 0.0642 $\pm$ 0.0060, an s23/s26 of 0.20 $\pm$ 0.02, and a steady-shear-flow viscosity $\eta$(5 °C, 10 $s^{-1}$, 2 wt.% MC) of 320 mPa•s. The properties of the methylcellulose (B) were measured as described below.

Determination of the DS(methyl) of Methylcellulose (B)

The determination of the % methoxyl in methylcellulose was carried out according to the United States Pharmacopeia (USP34). The values obtained were % methoxyl. These were subsequently converted into degree of substitution (DS) for methyl substituents. Residual amounts of salt were taken into account in the conversion.

Determination of the viscosity of Methylcellulose (B)

Unless otherwise mentioned, the steady-shear-flow viscosities $\eta$(5 °C, 10 $s^{-1}$, 2 wt.% MC) of an aqueous 2-wt.% methylcellulose (B) solution was measured at 5 °C at a shear rate of 10 $s^{-1}$ with an Anton Paar Physica MCR 501 rheometer and cone-and-plate sample fixtures (CP-50/1, 50-mm diameters).

Determination of s23/s26 of Methylcellulose (B)

The approach to measure the ether substituents in methylcellulose is generally known. See for example the approach described in principle for Ethyl Hydroxyethyl Cellulose in Carbohydrate Research, 176 (1988) 137-144, Elsevier Science Publishers B.V., Amsterdam, DISTRIBUTION OF SUBSTITUENTS IN O-ETHYL-O-(2-HYDROXYETHYL)CELLULOSE by Bengt Lindberg, Ulf Lindquist, and Olle Stenberg.

Specifically, determination of s23/s26 was conducted as follows: 10-12 mg of the methylcellulose were dissolved in 4.0 mL of dry analytical-grade dimethyl sulfoxide (DMSO) (Merck, Darmstadt, Germany, stored over 0.3nm molecular sieve beads) at about 90 °C with stirring and then cooled to room temperature. The solution was stirred at room temperature over night to ensure complete solubilization/dissolution. The entire perethylation including the solubilization of the methylcellulose was performed using a dry nitrogen atmosphere in a 4 mL screw cap vial. After solubilization, the dissolved methylcellulose was transferred to a 22-mL screw-cap vial to begin the perethylation process. Powdered sodium hydroxide (freshly pestled, analytical grade, Merck, Darmstadt, Germany) and ethyl iodide (for synthesis, stabilized with silver, Merck-Schuchardt, Hohenbrunn, Germany) were introduced in a thirty-fold molar excess relative to the level of anhydroglucose units in the methylcellulose, and the mixture was vigorously stirred under nitrogen in the dark for three days at ambient temperature. The perethylation was repeated with addition of the threefold amount of the reagents sodium hydroxide and ethyl iodide compared to the first reagent addition, and stirring at room temperature was continued for an additional two days. Optionally, the reaction mixture could be diluted with up to 1.5 mL DMSO to ensure good mixing during the course of the reaction. Next, five mL of 5 % aqueous sodium thiosulfate solution was poured into the reaction mixture, and the mixture was then extracted three times with 4 mL of dichloromethane. The combined extracts were washed three times with 2 mL of water. The organic phase was dried with anhydrous sodium sulfate (about1 g). After filtration, the solvent was removed with a gentle stream of nitrogen, and the sample was stored at 4 °C until needed.

Hydrolysis of about 5 mg of the perethylated samples was performed under nitrogen in a 2-mL screw-cap vial with 1 mL of 90 % aqueous formic acid under stirring at 100 °C for 1 hour. The acid was removed in a stream of nitrogen at 35-40 °C and the hydrolysis was repeated with 1 mL of 2M aqueous trifluoroacetic acid for 3 hours at 120 °C in an inert nitrogen atmosphere with stirring. After completion, the acid was removed to dryness in a stream of nitrogen at ambient temperature using ca. 1 mL of toluene for co-distillation.

The residues of the hydrolysis were reduced with 0.5 mL of 0.5-M sodium borodeuteride in 2N aqueous ammonia solution (freshly prepared) for 3 hours at room temperature with stirring. The excess reagent was destroyed by dropwise addition of about 200 μL of concentrated acetic acid. The resulting solution was evaporated to dryness in a stream of nitrogen at about 35-40 °C and subsequently dried in vacuum for 15 min at room temperature. The viscous residue was dissolved in 0.5 mL of 15 % acetic acid in methanol and evaporated to dryness at room temperature. This was done five times and repeated four additional times with pure methanol. After the final evaporation, the sample was dried in vacuum overnight at room temperature.

The residue of the reduction was acetylated with 600 μL of acetic anhydride and 150 μL of pyridine for 3 hrs at 90 °C. After cooling, the sample vial was filled with toluene and evaporated to dryness in a stream of nitrogen at room temperature. The residue was dissolved in 4 mL of dichloromethane and poured into 2 mL of water and extracted with 2 mL of dichloromethane. The extraction was repeated three times. The combined extracts were washed three times with 4 mL of water and dried with anhydrous sodium sulfate. The dried dichloromethane extract was subsequently submitted to GC analysis. Depending on the sensitivity of the GC system, a further dilution of the extract could be necessary.

Gas-liquid (GLC) chromatographic analyses were performed with Agilent 6890N type of gas chromatographs (Agilent Technologies GmbH, 71034 Boeblingen, Germany) equipped with Agilent J&W capillary columns (30 m, 0.25-mm ID, 0.25-μm phase layer thickness) operated with 1.5-bar helium carrier gas. The gas chromatograph was programmed with a temperature profile that held constant at 60 °C for 1 min, heated up at a rate of 20 °C / min to 200 °C, heated further up with a rate of 4 °C / min to 250 °C, and heated further up with a rate of 20 °C / min to 310 °C where it was held constant for another 10 min. The injector temperature was set to 280 °C and the temperature of the flame ionization detector (FID) was set to 300 °C. Exactly 1μL of each sample was injected in the splitless mode at 0.5-min valve time. Data were acquired and processed with a LabSystems Atlas work station.

Quantitative monomer composition data were obtained from the peak areas measured by GLC with FID detection. Molar responses of the monomers were calculated in line with the effective carbon number (ECN) concept but modified as described in the table below. The effective carbon number (ECN) concept has been described by Ackman (R.G. Ackman, J. Gas Chromatogr., 2 (1964) 173-179 and R.F. Addison, R.G. Ackman, J. Gas Chromatogr., 6 (1968) 135-138) and applied to the quantitative analysis of partially alkylated alditol acetates by Sweet et. al (D.P. Sweet, R.H. Shapiro, P. Albersheim, Carbohyd. Res., 40 (1975) 217-225).

ECN increments used for ECN calculations:

| Type of carbon atom | ECN increment |
|---|---|
| hydrocarbon | 100 |
| primary alcohol | 55 |
| secondary alcohol | 45 |

In order to correct for the different molar responses of the monomers, the peak areas were multiplied by molar response factors MRFmonomer which are defined as the response relative to the 2,3,6-Me monomer. The 2,3,6-Me monomer were chosen as reference since it was present in all samples analyzed in the determination of s23 / s26.

$$\text{MRFmonomer} = \text{ECN2,3,6-Me} \;/\; \text{ECNmonomer}$$

The mol fractions of the monomers were calculated by dividing the corrected peak areas by the total corrected peak area according to the following formulas:

(1) s23 is the sum of the molar fractions of anhydroglucose units which meet the following condition [the two hydroxy groups in the 2- and 3-positions of the anhydroglucose unit are substituted with methyl groups, and the 6-position is not substituted (= 23-Me)]; and
(2) s26 is the sum of the molar fractions of anhydroglucose units which meet the following condition [the two hydroxy groups in the 2- and 6-positions of the anhydroglucose unit are substituted with methyl groups, and the 3-position is not substituted (= 26-Me)]. The mean values $\pm$ two standard deviations ($2\sigma$) of the mol fraction (26-Me), the mol fraction (23-Me) and s23/s26 were calculated.

Comparative METHOCEL™ A4C Methylcellulose

A conventional methylcellulose was used that had a DS(methyl) of 1.7-1.9 (27.5-31.5 wt.% methoxyl), an s23/s26 of 0.38-0.42, and an Ubbelohde viscosity, measured as a 2.0 % by weight solution in water at 20°C according to ASTM D1347-72 (Reapproved 1995) of 400 - 450 mPa·s. The methylcellulose is commercially available from The Dow Chemical Company under the Trademark METHOCEL™ A4C cellulose ether.

Hydroxypropyl methylcellulose (HPMC)

The non-starch water-soluble polysaccharide (A) was a hydroxypropyl methylcellulose which is commercially available from The Dow Chemical Company under the Trademark METHOCEL™ K250M cellulose ether. METHOCEL™ K250M cellulose ether has a methoxyl content of 19 - 24 % and a hydroxypropoxyl content of 7-12 %, corresponding to a DS(methoxyl) of about 1.2-1.5 and an MS(hydroxypropoxyl) of about 0.1-0.3. METHOCEL™ K250M has a viscosity of about 250,000 mPa•s, determined as a 2.0 % by weight solution in water at 20°C $\pm$ 0.1 °C by an Ubbelohde viscosity measurement according to DIN 51562-1:1999-01 (January 1999). METHOCEL™ K250M cellulose ether was used in powder form.

Comparative Example I

The viscosity build-up of METHOCEL™ K250M cellulose ether in water was evaluated without subjecting METHOCEL™ K250M cellulose ether to a coating step.

Examples 1 and 2

An aqueous solution comprising 3 weight percent of methylcellulose (B) in water was foamed in a known manner by contacting the aqueous solution with an air stream. A method of generating foam is described in the International Patent Publication WO 03/020244. The foamed aqueous solution was contacted with 500 g of METHOCEL™ K250M cellulose ether at a rate of 100 g/minute in a vertical high shear granulator from Powrex Corporation. The weight ratio between the METHOCEL™ K250M cellulose ether and the methylcellulose (B) was controlled by the time period of adding the foamed aqueous solution to the METHOCEL™ K250M cellulose ether.

In Example 1 the time period of adding the foamed fluid was 2.5 min. to add 1.5 weight percent of methylcellulose (B) to 98.5 weight percent of METHOCEL™ K250M cellulose ether. In Example 2 the time period of adding the foamed fluid was 5 min. to add 3 weight percent of methylcellulose (B) to 97 weight percent of METHOCEL™ K250M cellulose ether.

The foam collapsed and formed a coating on the METHOCEL™ K250M cellulose ether particles. The powder was granulated. The granules were dried either by using a fluid bed at 60°C for 60 minutes or using oven at 50°C for 120 minutes.

Comparative Example II

Example 2 was repeated, except that a conventional METHOCEL™ A4C methylcellulose (which has an s23/s26 of 0.38 - 0.42) was used instead of methylcellulose (B) (which has an s23/s26 of 0.36 or less).

Determination of the Viscosity of Coated and Non-coated HPMC in Water

The coated HPMCs of Examples 1 and 2, the non-coated HPMC of Comparative Example I and the coated HPMC of Comparative Example II were dispersed separately under stirring using Yamato LT 400 lab overhead mixer having a rotor diameter of 63.5 mm and a gap distance between the outer diameter of the propeller and the stationary of 10.16 mm and running at 300 rpm in water of a temperature of 90 °C such that each dispersion contained 0.5 wt. % of HPMC (calculated as non-coated HPMC). The water temperature was reduced to 20 °C within 20 minutes.

The hydration behavior of the coated HPMCs of Examples 1 and 2 and the non-coated HPMC of the Comparative Example was measured after 0 min., 2 min., 5min., 10 min., 30 min., 60 min. and 120 min. stirring of the aqueous composition comprising the HPMC at 300 rpm at 20 °C. The viscosity was measured using a Brookfield LV viscometer (Model DVII) using spindle 3 at 30rpm,

The results are listed in Table 1 below.

Table 1

| Viscosity of aqueous solution comprising 0.5 wt.% of HPMC after x minutes (mPa•s) | Coated HPMC of Example 1 | Coated HPMC of Example 2 | Non-coated HPMC of Comparative Example I | coated HPMC of Comparative Example II |
|---|---|---|---|---|
| 0 min. | 148 | 46 | 701 | 304 |
| 2 min. | 160 | 58 | 755 | 354 |
| 5 min. | 197 | 84 | 741 | 381 |
| 10 min. | 252 | 131 | 731 | 551 |
| 30 min. | 421 | 258 | 718 | 621 |
| 60 min. | 524 | 571 | 721 | 728 |
| 120 min. | 625 | 648 | 715 | 768 |

The results in Table 1 illustrate that the coated non-starch water-soluble polysaccharide of the present invention exhibit a delayed viscosity increase, which is highly advantageous for effectively decreasing the slimy or tacky sensation in the mouth of an individual upon oral ingestion of the water-soluble polysaccharide. Moreover, the delay in the viscosity increase can be customized to the needs in a specific end-use by controlling the amount of the coating provided by the methylcellulose (B). The greater the amount of the coating provided by the methylcellulose (B), the more delayed is the viscosity increase of the non-starch water-soluble polysaccharide (A) in water. The coated HPMC of Comparative Example II, wherein the HPMC has been coated with a conventional methylcellulose, wherein hydroxy groups of anhydroglucose units are substituted with methyl groups such that s23/s26 is more than 0.36, are much less effective in delaying the viscosity increase.

Sensory Evaluation:

A high fiber protein peanut bar was produced having these ingredients:

Corn Syrup, 42DE: = 24.43 %

(continued)

| | |
|---|---|
| Honey: | = 19.54 % |
| Smooth Peanut Butter: | = 14.66 % |
| Ground Oats: | = 14.66 % |
| Soy Protein Isolate: | = 10.63 % |
| Ground Almonds: | = 4.88 % |
| Liquid Canola Oil: | = 4.88 % |
| Coated or non-coated HPMC: | = 5.00 % |
| Salt: | = 0.78 % |
| Yelkin Gold Lecithin: | = 0.39 % |
| Vanilla flavor: | = 0.15 % |
| Total: | = 100.00 % |

One set of protein peanut bars comprised 5 weight percent of the coated HPMC of Example 2. The other set of protein peanut bars comprised 5 weight percent of the coated HPMC of Comparative Example II and the third set of protein peanut bars comprised 5 weight percent of the non-coated HPMC of Comparative Example I. In a sensory test 11 participants tested the palatability of three protein peanut bars. The participants were asked to designate the most and the least slimy protein peanut bars. All participants tested protein peanut bars comprising the coated HPMC of Example 2, protein peanut bars comprising coated HPMC of Comparative Example II and protein peanut bars comprising the non-coated HPMC of Comparative Example I. All participants designated a protein peanut bar comprising the coated HPMC of Example 2 as the least slimy one.

Example 3

A methylcellulose (B) - 2 was produced in the same manner as described above for Methylcellulose (B), except that the dried and ground methylcellulose was partially depolymerized in a different manner, as subsequently described. The methylcellulose was partially depolymerized by contacting it with 1.07 g gaseous HCl per 550 g of methylcellulose at a temperature of 70 °C for 3.6 hours. The HCl gas was removed by evacuation, the methylcellulose was cooled to room temperature and subsequently neutralized with sodium bicarbonate.

The methylcellulose (B)-2 has a DS(methyl) of 1.88 (30.9 wt.% methoxyl), a mol fraction (26-Me) of 0.3276 ± 0.0039, a mol fraction (23-Me) of 0.0642 ± 0.0060, an s23/s26 of 0.20 ± 0.02, and a viscosity of 43 mPa•s, measured as 2 wt.% solution in water at 5 °C, using a Schott Ubbelohde tube viscometer.

Example 4

A methylcellulose was used which is commercially available from The Dow Chemical Company under the Trademark METHOCEL™ SGA16M cellulose ether which has a DS(methyl) of 1.9 (about 31 wt.% methoxyl), an s23/s26 between 0.27 and 0.32 and a viscosity of about 16000 mPa•s, determined as a 2.0 % by weight solution in water at 20 °C by an Ubbelohde viscosity measurement according to DIN 51562-1:1999-01 (January 1999).

Partial depolymerization was conducted by contacting the methylcellulose with 1.07 g of gaseous HCl per 550 g of methylcellulose at a temperature of 70 °C for 3 hours, followed by subsequent neutralization with sodium bicarbonate. The partially depolymerized methylcellulose had a viscosity of 61 mPa•s, measured as 2 wt.% solution in water at 5 °C, using a Schott Ubbelohde tube viscometer. The methylcellulose is designated as Methylcellulose (B) - 3.

Comparative Example III: METHOCEL™ A4M Methylcellulose

A conventional methylcellulose was used that has a DS(methyl) of 1.7-1.9 (27.5-31.5 wt.% methoxyl), an s23/s26 of 0.38 - 0.42, and an Ubbelohde viscosity, measured as a 2.0 % by weight solution in water at 20°C according to ASTM D1347-72 (Reapproved 1995) of 4000 mPa•s. The methylcellulose is commercially available from The Dow Chemical Company under the Trademark METHOCEL™ A4M cellulose ether. Partial depolymerization was conducted by contacting the methylcellulose with 1.07 g of gaseous HCl per 550 g of methylcellulose at a temperature of 65 °C for 3 hours, followed by subsequent neutralization with sodium bicarbonate. The partially depolymerized methylcellulose had a viscosity of 52 mPa•s, measured as 2 wt. % solution in water at 5 °C, using a Schott Ubbelohde tube viscometer.

Coating Experiments

METHOCEL™ K250M cellulose ether particles were granulated and at the same time coated in a Glatt Powrex Model FM-VG-10 high-shear granulator (Glatt Air Techniques Inc. Ramsey, NJ USA). A main impeller speed of 500 rpm and a side-chopper blade speed of 1800 rpm were maintained during the granulation step. The lot size was 500 grams. A 3% aqueous solution of either Methylcellulose (B) - 2 of Example 3, of Methylcellulose (B) - 3 of Example 4 or of METHOCEL™ A methylcellulose of Comparative Example III was sprayed on the METHOCEL™ K250M cellulose ether using a nozzle. The rate of spraying of the aqueous methylcellulose solution was 10-12 g/minute. A total of 500 grams of each coating solution was applied which equals to addition of 3.0 wt% methylcellulose respectively. The granulation was discontinued after reaching the required amount of coating solution addition. At the end of the granulation step, the agglomerated product was evenly spread onto paper-lined, plastic trays and dried overnight in a convection oven at 43°C.

Determination of the Viscosity of Coated and Non-coated HPMC in Water

The HPMCs coated with Methylcellulose (B)-2 of Example 3, with Methylcellulose (B)-3 of Example 4 or with METHOCEL™ A methylcellulose of Comparative Example III and the non-coated HPMC of Comparative Example I were dispersed separately under stirring using Yamato LT 400 lab overhead mixer having a rotor diameter of 63.5 mm and a gap distance between the outer diameter of the propeller and the stationary of 10.16 mm and running at 300 rpm in water of a temperature of 90 °C such that each dispersion contained 0.5 wt. % of HPMC (calculated as non-coated HPMC). The water temperature was reduced to 20 °C within 20 minutes.

The hydration behavior of the coated HPMCs of Examples 3 and 4 and of Comparative Example III and the non-coated HPMC of the Comparative Example I was measured after 0 min., 2 min., 5min., 10 min., 30 min., 60 min. and 120 min. stirring of the aqueous composition comprising the HPMC at 300 rpm at 20 °C. The viscosity was measured using a Brookfield LV viscometer (Model DVII) using spindle 3 at 30rpm.

The results are listed in Table 2 below.

Table 2

| Viscosity of aqueous solution comprising 0.5 wt.% of HPMC after x minutes (mPa•s) | Coated HPMC of Example 3 | Coated HPMC of Example 4 | Non-coated HPMC of Comparative Example I | Coated HPMC of Comparative Example III |
|---|---|---|---|---|
| 0 min. | 49 | 70 | 712 | 340 |
| 2 min. | 63 | 95 | 740 | 370 |
| 5 min. | 78 | 124 | 735 | 410 |
| 10 min. | 128 | 168 | 731 | 530 |
| 30 min. | 270 | 320 | 728 | 640 |
| 60 min. | 590 | 610 | 725 | 710 |
| 120 min. | 680 | 690 | 720 | 730 |

The results in Table 2 illustrate that the coated non-starch water-soluble polysaccharide of the present invention exhibit a delayed viscosity increase, which is highly advantageous for effectively decreasing the slimy or tacky sensation in the mouth of an individual upon oral ingestion of the water-soluble polysaccharide. The coated HPMC of Comparative Example III, wherein the HPMC has been coated with a conventional methylcellulose, wherein hydroxy groups of anhydroglucose units are substituted with methyl groups such that s23/s26 is more than 0.36, are much less effective in delaying the viscosity increase.

The series of experiments reported in Table 2 was conducted a few months after the series of experiments reported in Table 1. This caused the difference in the results for the non-coated HPMC of Comparative Example I reported in Tables 1 and Table 2, which are within the normal experimental error.

## Claims

1. A non-starch water-soluble polysaccharide (A) being at least partially coated with a methylcellulose (B) having anhydroglucose units joined by 1-4 linkages wherein hydroxy groups of anhydroglucose units are substituted with methyl groups such that s23/s26 is from 0.08 to 0.36 , wherein s23 is the molar fraction of anhydroglucose units

wherein only the two hydroxy groups in the 2- and 3-positions of the anhydroglucose unit are substituted with methyl groups and wherein s26 is the molar fraction of anhydroglucose units wherein only the two hydroxy groups in the 2- and 6-positions of the anhydroglucose unit are substituted with methyl groups, and
wherein the non-starch water-soluble polysaccharide (A) is different from said methylcellulose (B).

**2.** The at least partially coated polysaccharide of claim 1 wherein the water-soluble polysaccharide (A) is a water-soluble cellulose ether different from said methylcellulose (B).

**3.** The at least partially coated polysaccharide of claim 2 wherein the water-soluble polysaccharide (A) is a water-soluble $C_2$-$C_3$-alkyl cellulose, $C_1$-$C_3$-alkyl hydroxy-$C_{1-3}$-alkyl cellulose, hydroxy-$C_{1-3}$-alkyl cellulose, mixed hydroxy-$C_1$-$C_3$-alkyl cellulose, or mixed $C_1$-$C_3$-alkyl cellulose.

**4.** The at least partially coated polysaccharide of claim 3 wherein the water-soluble polysaccharide (A) is a hydroxypropyl methylcellulose.

**5.** The at least partially coated polysaccharide of any one of claims 1 to 4 wherein said methylcellulose (B) has a viscosity of from 2.4 to 10,000 mPa•s, when measured as a 2 wt.% aqueous solution at 5 °C at a shear rate of 10 $s^{-1}$.

**6.** The at least partially coated polysaccharide of claim 5 wherein said methylcellulose (B) has a viscosity of from 4 to 1000 mPa•s, when measured as a 2 wt.% aqueous solution at 5 °C at a shear rate of 10 $s^{-1}$.

**7.** The at least partially coated polysaccharide of any one of claims 1 to 6 wherein said methylcellulose (B) has a DS(methyl) of from 1.55 to 2.25.

**8.** The at least partially coated polysaccharide of any one of claims 1 to 7 wherein said methylcellulose (B) has anhydroglucose units joined by 1-4 linkages wherein hydroxy groups of anhydroglucose units are substituted with methyl groups such that s23/s26 is 0.33 or less.

**9.** The at least partially coated polysaccharide of claim 8 wherein said methylcellulose (B) has anhydroglucose units joined by 1-4 linkages wherein hydroxy groups of anhydroglucose units are substituted with methyl groups such that s23/s26 is 0.26 or less.

**10.** The at least partially coated polysaccharide of any one of claims 1 to 9 being coated with 0.5 to 10 percent of said methylcellulose, based on the weight of the non-coated polysaccharide (A).

**11.** The at least partially coated polysaccharide of any one of claims 1 to 10 wherein
the water-soluble polysaccharide (A) is a hydroxypropyl methylcellulose having a viscosity of more than 10,000 mPa·s, determined as a 2.0 % by weight solution in water at 20°C, and
the methylcellulose (B) has anhydroglucose units joined by 1-4 linkages wherein hydroxy groups of anhydroglucose units are substituted with methyl groups such that s23/s26 is 0.33 or less, a DS(methyl) of from 1.55 to 2.25, and a viscosity of from 4 to 400 mPa•s, when measured as a 2 wt.% aqueous solution at 5 °C at a shear rate of 10 $s^{-1}$, and the water-soluble polysaccharide (A) is coated with 0.5 to 10 percent of the methylcellulose (B), based on the weight of the non-coated polysaccharide (A).

**12.** The at least partially coated polysaccharide of claim 11 wherein the methylcellulose (B) has anhydroglucose units joined by 1-4 linkages wherein hydroxy groups of anhydroglucose units are substituted with methyl groups such that s23/s26 is 0.26 or less.

**13.** A food, food ingredient or food supplement comprising the polysaccharide of any one of claims 1 to 12.

**14.** A method of improving the palatability of a non-starch water-soluble polysaccharide (A) comprising the step of at least partially coating the non-starch water-soluble polysaccharide (A) with a methylcellulose (B) having anhydroglucose units joined by 1-4 linkages wherein hydroxy groups of anhydroglucose units are substituted with methyl groups such that s23/s26 is from 0.08 to 0.36 wherein s23 is the molar fraction of anhydroglucose units wherein only the two hydroxy groups in the 2- and 3-positions of the anhydroglucose unit are substituted with methyl groups and wherein s26 is the molar fraction of anhydroglucose units wherein only the two hydroxy groups in the 2- and 6-positions of the anhydroglucose unit are substituted with methyl groups, with the proviso that the non-starch water-soluble polysaccharide (A) is different from said methylcellulose (B).

15. The use of the at least partially coated polysaccharide of claims 1 to 12 for reducing the slimy or tacky sensation in the mouth of an individual upon oral ingestion of the water-soluble polysaccharide (A).

## Patentansprüche

1. Ein wasserlösliches Nicht-Stärke-Polysaccharid (A), welches mindestens teilweise mit einer Methylcellulose (B), welche 1 - 4 verknüpfte Anhydroglucoseeinheiten aufweist, beschichtet ist, wobei die Hydroxygruppen der Anhydroglucoseeinheiten mit Methylgruppen substituiert sind, so dass s23/s26 0,08 bis 0,36 beträgt, wobei s23 die molare Fraktion der Anhydroglucoseeinheiten ist, bei der nur die beiden Hydroxygruppen in der 2- und 3-Position der Anhydroglucoseeinheit mit Methylgruppen substituiert sind und wobei s26 die molare Fraktion der Anhydroglucoseeinheiten ist, bei der nur die beiden Hydroxygruppen in der 2- und 6-Position der Anhydroglucoseeinheit mit Methylgruppen substituiert sind und
wobei das wasserlöslichen Nicht-Stärke-Polysaccharid (A) sich von der besagten Methylcellulose (B) unterscheidet.

2. Das mindestens teilweise beschichtete Polysaccharid nach Anspruch 1, wobei das wasserlösliche Polysaccharid (A) ein wasserlöslicher Celluloseether ist und sich von der besagten Methylcellulose (B) unterscheidet.

3. Das mindestens teilweise beschichtete Polysaccharid nach Anspruch 2, wobei das wasserlösliche Polysaccharid (A) eine wasserlösliches $C_2$-$C_3$-Alkylcellulose, $C_1$-$C_3$-Alkylhydroxy-$C_1$-$C_3$-Alkylcellulose, Hydroxy-$C_1$-$C_3$-Alkylcellulose, gemischte Hydroxy-$C_1$-$C_3$-Alkylcellulose, oder gemischte $C_1$-$C_3$-Alkylcellulose ist.

4. Das mindestens teilweise beschichtete Polysaccharid nach Anspruch 3, wobei das wasserlösliche Polysaccharid (A) eine Hydroxypropylmethylcellulose ist.

5. Das mindestens teilweise beschichtete Polysaccharid nach einem der Ansprüche 1 bis 4, wobei die besagte Methylcellulose (B) eine Viskosität von 2,4 bis 10.000 mPa·s aufweist, wenn diese als eine 2 Gew.-% wässrige Lösung bei 5 °C und einer Scherrate von 10 $s^{-1}$ gemessen wird.

6. Das mindestens teilweise beschichtete Polysaccharid nach Anspruch 5, wobei die besagte Methylcellulose (B) eine Viskosität von 4 bis 1000 mPa·s aufweist, wenn diese als eine 2 Gew.-% wässrige Lösung bei 5 °C und einer Scherrate von 10 $s^{-1}$ gemessen wird.

7. Das mindestens teilweise beschichtete Polysaccharid nach einem der Ansprüche 1 bis 6, wobei die besagte Methylcellulose (B) ein DS(Methyl) von 1,55 bis 2,25 aufweist.

8. Das mindestens teilweise beschichtete Polysaccharid nach einem der Ansprüche 1 bis 7, wobei die besagte Methylcellulose (B) 1 - 4 verknüpfte Anhydroglucoseeinheiten aufweist, wobei die Hydroxygruppen der Anhydroglucoseeinheiten mit Methylgruppen substituiert sind, so dass s23/s26 0,33 oder weniger beträgt.

9. Das mindestens teilweise beschichtete Polysaccharid nach Anspruch 8, wobei die besagte Methylcellulose (B) 1 - 4 verknüpfte Anhydroglucoseeinheiten aufweist, wobei die Hydroxygruppen der Anhydroglucoseeinheiten mit Methylgruppen substituiert sind, so dass s23/s26 0,26 oder weniger beträgt.

10. Das mindestens teilweise beschichtete Polysaccharid nach einem der Ansprüche 1 bis 9, welches mit 0,5 bis 10 Prozent von der besagten Methylcellulose beschichtet ist, bezogen auf das Gewicht des nicht beschichteten Polysaccharids (A).

11. Das mindestens teilweise beschichtete Polysaccharid nach einem der Ansprüche 1 bis 10, wobei
das wasserlösliche Polysaccharid (A) eine Hydroxypropylmethylcellulose ist, welche eine Viskosität von mehr als 10.000 mPa·s aufweist, gemessen als eine 2,0 gew.-% Lösung in Wasser bei 20 °C, und
die Methylcellulose (B) 1 - 4 verknüpfte Anhydroglucoseeinheiten aufweist, wobei die Hydroxygruppen der Anhydroglucoseeinheiten mit Methylgruppen substituiert sind, so dass s23/s26 0,33 oder weniger beträgt, ein DS(Methyl) von 1,55 bis 2,25, und eine Viskosität von 4 bis 400 mPa·s aufweist, wenn diese als eine 2 Gew.-% wässrige Lösung bei 5 °C und einer Scherrate von 10 $s^{-1}$ gemessen wird, und
das wasserlösliche Polysaccharid (A) mit 0,5 bis 10 Prozent der Methylcellulose (B) beschichtet ist, bezogen auf das Gewicht des nicht beschichteten Polysaccharids (A).

**12.** Das mindestens teilweise beschichtete Polysaccharid nach Anspruch 11, wobei die Methylcellulose (B) 1 - 4 verknüpfte Anhydroglucoseeinheiten aufweist, wobei die Hydroxygruppen der Anhydroglucoseeinheiten mit Methylgruppen substituiert sind, so dass s23/s26 0,26 oder weniger beträgt.

**13.** Nahrungsmittel, Nahrungsmittelbestandteil oder Nahrungsmittelzusatz enthaltend das Polysaccharid nach einem der Ansprüche 1 bis 12.

**14.** Verfahren zur Verbesserung der Schmackhaftigkeit eines wasserlöslichen Nicht-Stärke-Polysaccharids (A) enthaltend den Schritt der mindestens teilweisen Beschichtung des wasserlöslichen Nicht-Stärke-Polysaccharids (A) mit einer Methylcellulose (B), welche 1-4 verknüpfte Anhydroglucoseeinheiten aufweist, wobei die Hydroxygruppen der Anhydroglucoseeinheiten mit Methylgruppen substituiert sind, so dass s23/s26 0,36 oder weniger beträgt, wobei s23 die molare Fraktion der Anhydroglucoseeinheiten ist, bei der nur die beiden Hydroxygruppen in der 2-und 3-Position der Anhydroglucoseeinheit mit Methylgruppen substituiert sind und wobei s26 die molare Fraktion der Anhydroglucoseeinheiten ist, bei der nur die beiden Hydroxygruppen in der 2- und 6-Position der Anhydroglucoseeinheit mit Methylgruppen substituiert sind,
mit der Bedingung, dass sich das wasserlösliche Nicht-Stärke-Polysaccharid (A) von der Methylcellulose (B) unterscheidet.

**15.** Verwendung des mindestens teilweise beschichteten Polysaccharids nach den Ansprüchen 1 bis 12, für die Reduzierung der schleimigen oder klebrigen Wahrnehmung im Mund eines Individuums nach oraler Nahrungsaufnahme des wasserlöslichen Polysaccharids (A).

**Revendications**

**1.** Un polysaccharide hydrosoluble non amylacé (A) qui est au moins partiellement enrobé d'une méthylcellulose (B) ayant des unités anhydroglucose jointes par 1 à 4 liaisons où des groupes hydroxy d'unités anhydroglucose sont substitués par des groupes méthyle de telle sorte que s23/s26 aille de 0,08 à 0,36, où s23 est la fraction molaire d'unités anhydroglucose où seuls les deux groupes hydroxy dans les positions 2 et 3 de l'unité anhydroglucose sont substitués par des groupes méthyle et où s26 est la fraction molaire d'unités anhydroglucose où seuls les deux groupes hydroxy dans les positions 2 et 6 de l'unité anhydroglucose sont substitués par des groupes méthyle, et où le polysaccharide hydrosoluble non amylacé (A) est différent de ladite méthylcellulose (B).

**2.** Le polysaccharide au moins partiellement enrobé de la revendication 1 où le polysaccharide hydrosoluble (A) est un éther de cellulose hydrosoluble différent de ladite méthylcellulose (B).

**3.** Le polysaccharide au moins partiellement enrobé de la revendication 2 où le polysaccharide hydrosoluble (A) est une $C_2$-$C_3$-alkyl cellulose, $C_1$-$C_3$-alkyl hydroxy-$C_{1-3}$-alkyl cellulose, hydroxy-$C_{1-3}$-alkyl cellulose, hydroxy-$C_1$-$C_3$-alkyl cellulose mixte, ou $C_1$-$C_3$-alkyl cellulose mixte hydrosoluble.

**4.** Le polysaccharide au moins partiellement enrobé de la revendication 3 où le polysaccharide hydrosoluble (A) est une hydroxypropyl méthylcellulose.

**5.** Le polysaccharide au moins partiellement enrobé de l'une quelconque des revendications 1 à 4 où ladite méthylcellulose (B) a une viscosité allant de 2,4 à 10 000 mPa·s, lorsque mesurée en tant que solution aqueuse à 2 % en poids à 5 °C à un taux de cisaillement de 10 $s^{-1}$.

**6.** Le polysaccharide au moins partiellement enrobé de la revendication 5 où ladite méthylcellulose (B) a une viscosité allant de 4 à 1 000 mPa·s, lorsque mesurée en tant que solution aqueuse à 2 % en poids à 5 °C à un taux de cisaillement de 10 $s^{-1}$.

**7.** Le polysaccharide au moins partiellement enrobé de l'une quelconque des revendications 1 à 6 où ladite méthylcellulose (B) a un DS(méthyle) allant de 1,55 à 2,25.

**8.** Le polysaccharide au moins partiellement enrobé de l'une quelconque des revendications 1 à 7 où ladite méthylcellulose (B) a des unités anhydroglucose jointes par 1 à 4 liaisons où des groupes hydroxy d'unités anhydroglucose sont substitués par des groupes méthyle de telle sorte que s23/s26 soit de 0,33 ou moins.

9. Le polysaccharide au moins partiellement enrobé de la revendication 8 où ladite méthylcellulose (B) a des unités anhydroglucose jointes par 1 à 4 liaisons où des groupes hydroxy d'unités anhydroglucose sont substitués par des groupes méthyle de telle sorte que s23/s26 soit de 0,26 ou moins.

10. Le polysaccharide au moins partiellement enrobé de l'une quelconque des revendications 1 à 9 qui est enrobé de 0,5 à 10 pour cent de ladite méthylcellulose, rapporté au poids du polysaccharide non enrobé (A).

11. Le polysaccharide au moins partiellement enrobé de l'une quelconque des revendications 1 à 10 où
le polysaccharide hydrosoluble (A) est une hydroxypropyl méthylcellulose ayant une viscosité de plus de 10 000 mPa·s, déterminée en tant que solution à 2,0 % en poids dans de l'eau à 20 °C, et
la méthylcellulose (B) a des unités anhydroglucose jointes par 1 à 4 liaisons où des groupes hydroxy d'unités anhydroglucose sont substitués par des groupes méthyle de telle sorte que s23/s26 soit de 0,33 ou moins, un DS(méthyle) allant de 1,55 à 2,25, et une viscosité allant de 4 à 400 mPa·s, lorsque mesurée en tant que solution aqueuse à 2 % en poids à 5 °C à un taux de cisaillement de 10 $s^{-1}$, et
le polysaccharide hydrosoluble (A) est enrobé de 0,5 à 10 pour cent de la méthylcellulose (B), rapporté au poids du polysaccharide non enrobé (A).

12. Le polysaccharide au moins partiellement enrobé de la revendication 11 où la méthylcellulose (B) a des unités anhydroglucose jointes par 1 à 4 liaisons où des groupes hydroxy d'unités anhydroglucose sont substitués par des groupes méthyle de telle sorte que s23/s26 soit de 0,26 ou moins.

13. Un aliment, ingrédient alimentaire ou complément alimentaire comprenant le polysaccharide de l'une quelconque des revendications 1 à 12.

14. Une méthode pour améliorer la palatabilité d'un polysaccharide hydrosoluble non amylacé (A) comprenant l'étape consistant à enrober au moins partiellement le polysaccharide hydrosoluble non amylacé (A) avec
une méthylcellulose (B) ayant des unités anhydroglucose jointes par 1 à 4 liaisons où des groupes hydroxy d'unités anhydroglucose sont substitués par des groupes méthyle de telle sorte que s23/s26 aille de 0,08 à 0,36 où s23 est la fraction molaire d'unités anhydroglucose où seuls les deux groupes hydroxy dans les positions 2 et 3 de l'unité anhydroglucose sont substitués par des groupes méthyle et où s26 est la fraction molaire d'unités anhydroglucose où seuls les deux groupes hydroxy dans les positions 2 et 6 de l'unité anhydroglucose sont substitués par des groupes méthyle, à la condition que le polysaccharide hydrosoluble non amylacé (A) soit différent de ladite méthylcellulose (B).

15. L'utilisation du polysaccharide au moins partiellement enrobé des revendications 1 à 12 pour réduire la sensation visqueuse ou poisseuse dans la bouche d'un individu lors de l'ingestion orale du polysaccharide hydrosoluble (A).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2005020718 A
- WO 9209212 A
- EP 0504870 B
- US 4645812 A
- WO 03020244 A
- WO 03020247 A
- EP 1141029 A
- EP 210917 A
- EP 1423433 A
- US 4316982 A


### Non-patent literature cited in the description


- **G. BARTELMUS ; R. KETTERER.** *Z. Anal. Chem.,* 1977, vol. 286, 161-190
- Ethyl Hydroxyethyl Cellulose in Carbohydrate Research. **BENGT LINDBERG ; ULF LINDQUIST ; OLLE STENBERG.** DISTRIBUTION OF SUBSTITUENTS IN O-ETHYL-O-(2-HYDROXYETHYL)CELLULOSE. Elsevier Science Publishers B.V, 1988, vol. 176, 137-144
- **R.G. ACKMAN.** *J. Gas Chromatogr.,* 1964, vol. 2, 173-179
- **R.F. ADDISON ; R.G. ACKMAN.** *J. Gas Chromatogr.,* 1968, vol. 6, 135-138
- **D.P. SWEET ; R.H. SHAPIRO ; P. ALBERSHEIM.** *Carbohyd. Res.,* 1975, vol. 40, 217-225